# EUROPEAN PATENT SPECIFICATION

(11) **EP 2 492 458 B1**
(45) Date of publication and mention of the grant of the patent: **07.12.2016**
(21) Application number: 10825032.5
(22) Date of filing: 21.10.2010
(51) Int. Cl.: F01K 23/10, F01D 15/04, F01D 15/10, F01K 15/04, F01N 5/04, F02B 37/007, F02G 5/02, F01K 13/02, F02D 23/00, F02D 41/02, F01N 5/02, F01K 23/06, F01K 23/14, F02B 37/00, F02C 6/12, F02D 41/00, F02B 29/04, F02B 41/10, F02D 29/06

(54) **TURBO COMPOUND SYSTEM AND METHOD FOR OPERATING SAME**
TURBO-COMPOUND-SYSTEM UND BETRIEBSVERFAHREN DAFÜR
SYSTÈME DE TURBORÉCUPÉRATION ET PROCÉDÉ D'UTILISATION

(30) Priority: 23.10.2009 JP 2009244382
(43) Date of publication of application: 29.08.2012
(73) Proprietor: Mitsubishi Heavy Industries, Ltd., Tokyo 108-8215 (JP)
(72) Inventor: SHIRAISHI, Keiichi, Tokyo 108-8215 (JP); ICHIKI, Yoshihiro, Tokyo 108-8215 (JP)
(74) Representative: Henkel, Breuer & Partner
(86) International application number: PCT/JP2010/068634
(87) International publication number: WO 2011/049183

(56) References cited:
- WO-A1-2008/135059
- DE-A1- 4 027 503
- JP-A- 1 195 924
- JP-A- 3 164 526
- JP-A- 61 244 806
- JP-A- 63 183 225
- JP-A- 63 302 138
- JP-A- 2008 128 129
- JP-U- 61 113 196
- JP-U- S61 113 196

## Description

### {Technical Field}

The present invention relates to a turbo compound system, which recovers exhaust heat energy of exhaust gas (combustion gas) discharged from an engine body that constitutes a marine diesel engine, a ground generator diesel engine, etc., as motive power, and to a method for operating the same.

### {Background Art}

Conventionally, there is a known operation method in which a diesel engine is provided with a plurality of superchargers, and the number of superchargers operated is changed according to the load (for example, see JP Sho 60-166716A).

JP S61-113196U discloses a turbo compound system including a pair of exhaust turbo chargers, an auxiliary turbine arranged to be driven by combustion gas from a combustor and extracted at an upstream side of the exhaust turbo chargers, a steam turbine arranged to be driven by steam generated by an exhaust gas economizer, a generator connected to rotation shafts of the auxiliary turbine and of the steam turbine, and a control unit for the turbo compound system. When an engine load is equal or less than a predetermined value, the output of the generator is adjusted by controlling an amount of the exhaust gas.

On the other hand, attempts have been made to further improve the energy-saving efficiency by configuring a turbo compound system equipped with a power turbine and a steam turbine, which are driven by exhaust gas from a diesel engine, in addition to a plurality of superchargers, so that the exhaust gas energy is recovered as the power generation output.

### {Summary of Invention}

### {Technical Problem}

However, an operation system and an operation method that satisfy both energy-saving efficiency and improvements in the engine output and engine efficiency, when equipped with a plurality of superchargers, a power turbine, and a steam turbine, have not been studied.

The present invention has been made in view of these circumstances, and an object thereof is to provide a turbo compound system that has high energy-saving efficiency and improved engine output and engine efficiency.

### {Solution to Problem}

To solve the above-described problem, a turbo compound system and a method for operating the same of the present invention employ the features recited in claim 1 and claim 2, respectively.

Specifically, a turbo compound system according to a first aspect of the present invention, as defined by appended claim 1, inter alia includes a plurality of exhaust turbochargers driven by exhaust gas introduced from an engine body; a power turbine driven by exhaust gas extracted from an upstream side of the exhaust turbochargers; a steam turbine that is connected to a rotation shaft of the power turbine and is driven by steam generated by an exhaust gas boiler, which utilizes exhaust gas of the engine body; a generator connected to rotation shafts of the power turbine and the steam turbine; and a control unit that controls an operation of the exhaust turbochargers, the power turbine, and the steam turbine. The control unit reduces an output of the power turbine by stopping at least one of the exhaust turbochargers when an engine load on the engine body is less than or equal to a predetermined value and by reducing an amount of exhaust gas extracted from the engine body when an inboard power demand is smaller than a maximum power generation output achievable with the turbo compound system.

When the engine load on the engine body is in a low-load region, i.e., less than or equal to a predetermined value, at least one of the exhaust turbochargers is stopped. Because at least one of the exhaust turbochargers is stopped, the flow rate of the exhaust gas flowing into another exhaust turbocharger increases by a corresponding amount, and the scavenging pressure (the pressure of the supercharged air (outside air)) supplied from another exhaust turbocharger to the engine body increases. With this configuration, even when the engine body is in a low-load region, the minimum scavenging pressure that enables the power turbine to be activated and the exhaust heat to be recovered can be obtained. Thus, the exhaust heat energy from the engine body can be efficiently recovered as motive power (power-generation load), achieving a further energy saving.

Furthermore, when the inboard power demand is smaller than the maximum power generation output achievable with the turbo compound system, the output of the power turbine is reduced by reducing the amount of exhaust gas extracted from the engine body. By reducing the amount of exhaust gas extracted, the amount of exhaust gas flowing into the exhaust turbocharger is increased, and hence, the scavenging pressure can be increased. With this configuration, even when the engine body has a low load, the efficiency of the engine body can be improved by increasing the scavenging pressure.

Even if the output of the power turbine is reduced as above, the required power generation output can be ensured because power generation can be performed by the steam turbine, which recovers heat by using the exhaust gas boiler.

Furthermore, in the turbo compound system according to the first aspect of the present invention, when a power demand decreases, the control unit reduces the output of the power turbine so as to compensate for the difference between the output of the steam turbine and the power demand.

When the power demand decreases, the output of the power turbine is reduced so as to compensate for the difference between the output of the steam turbine and the power demand. With this configuration, because an increase in scavenging pressure due to a reduction in the output of the power turbine preferentially occurs, an improvement in the efficiency of the engine body can be achieved.

Even when the power demand decreases, because the output of the power turbine is reduced in preference to that of the steam turbine by reducing the output of the power turbine so as to compensate for the difference between the output of the steam turbine and the power demand, an excessive reduction in the output of the steam turbine can be suppressed as much as possible. With this configuration, it is possible to avoid a situation where steam generated in the exhaust gas boiler becomes redundant because of an excessive reduction in the output of the steam turbine and is released outside (for example, into the condenser). Thus, it is possible to efficiently recover the exhaust heat from the engine body without waste.

A method for operating a turbo compound system according to a second aspect of the present invention as defined by appended claim 2, comprises inter alia operating a turbo compound system equipped with a plurality of exhaust turbochargers driven by exhaust gas introduced from an engine body; a power turbine driven by exhaust gas extracted from an upstream side of the exhaust turbochargers; a steam turbine that is connected to a rotation shaft of the power turbine and is driven by steam generated by an exhaust gas boiler, which utilizes exhaust gas of the engine body; a generator connected to rotation shafts of the power turbine and the steam turbine; and a control unit that controls an operation of the exhaust turbochargers, the power turbine, and the steam turbine. The control unit reduces an output of the power turbine by stopping at least one of the exhaust turbochargers when an engine load on the engine body is less than or equal to a predetermined value and by reducing an amount of exhaust gas extracted from the engine body when an inboard power demand is smaller than a maximum power generation output achievable with the turbo compound system.

When the engine load on the engine body is in a low-load region, i.e., less than or equal to a predetermined value, at least one of the exhaust turbochargers is stopped. Because at least one of the exhaust turbochargers is stopped, the flow rate of the exhaust gas flowing into another exhaust turbocharger increases by a corresponding amount, and the scavenging pressure (the pressure of the supercharged air (outside air)) supplied from another exhaust turbocharger to the engine body increases. With this configuration, even when the engine body is in a low-load region, the minimum scavenging pressure that enables the power turbine to be activated and the exhaust heat to be recovered can be obtained. Thus, the exhaust heat energy from the engine body can be efficiently recovered as motive power (power-generation load), and a further energy saving can be achieved.

Furthermore, when the inboard power demand is smaller than the maximum power generation output achievable with the turbo compound system, the output of the power turbine is reduced by reducing the amount of exhaust gas extracted from the engine body. By reducing the amount of exhaust gas extracted, the amount of exhaust gas flowing into the exhaust turbocharger is increased, and hence, the scavenging pressure can be increased. With this configuration, even when the engine body has a low load, the efficiency of the engine body can be improved by increasing the scavenging pressure.

Even if the output of the power turbine is reduced as above, the required power generation output can be ensured because power generation can be performed by the steam turbine, which recovers heat by using the exhaust gas boiler.

### {Advantageous Effects of Invention}

The turbo compound system and the method for operating the same of the present invention provide the following advantages.

When the engine load on the engine body is in a low-load region, i.e., less than or equal to a predetermined value, at least one of the exhaust turbochargers is stopped, and the output of the power turbine is reduced by reducing the amount of exhaust gas extracted from the engine body. Thus, the scavenging pressure is increased and the activation region of the power turbine can be increased, achieving not only an improvement in energy-saving efficiency but also an improvement in the efficiency of the engine body.

### {Brief Description of Drawings}

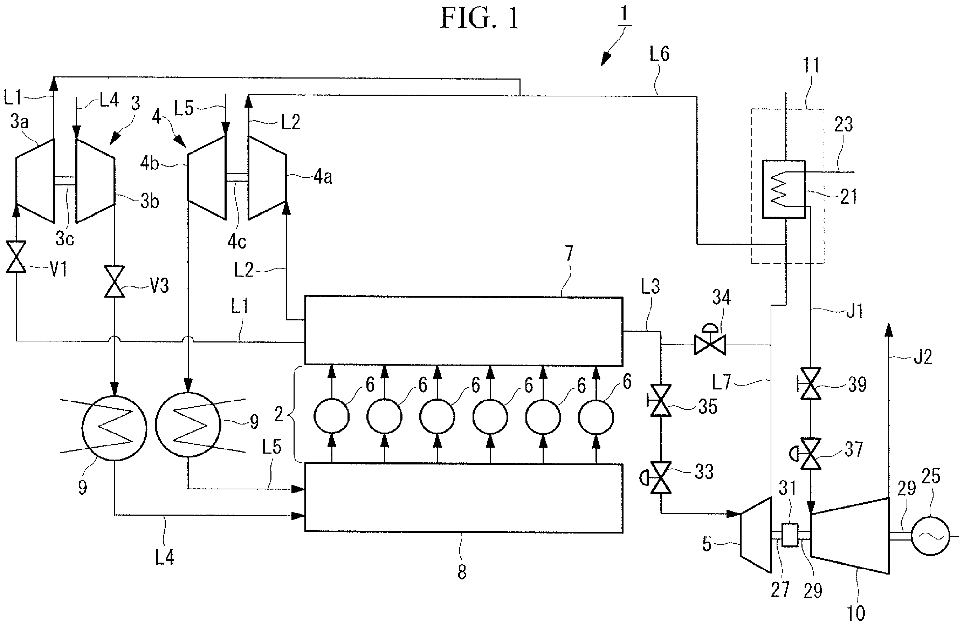

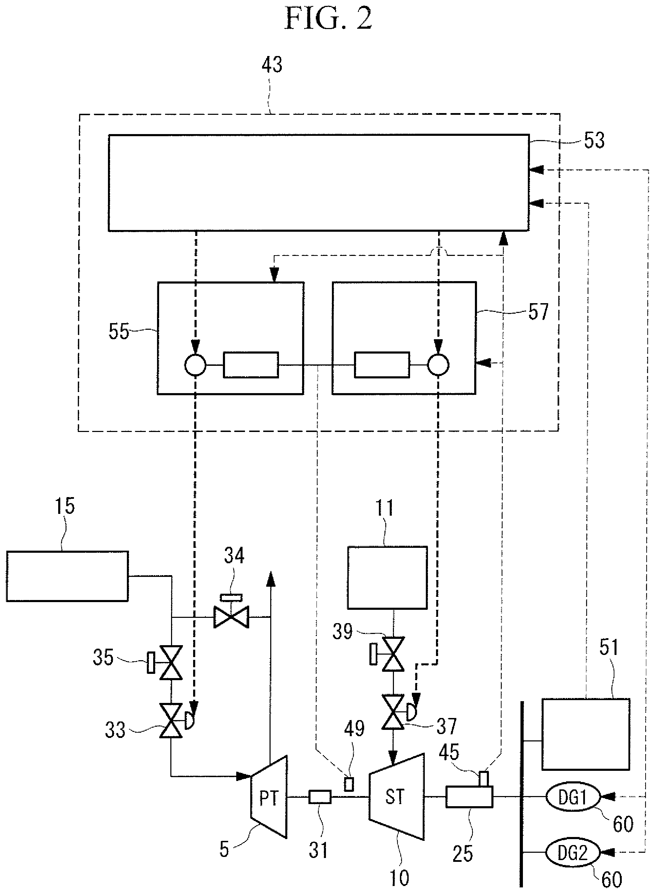

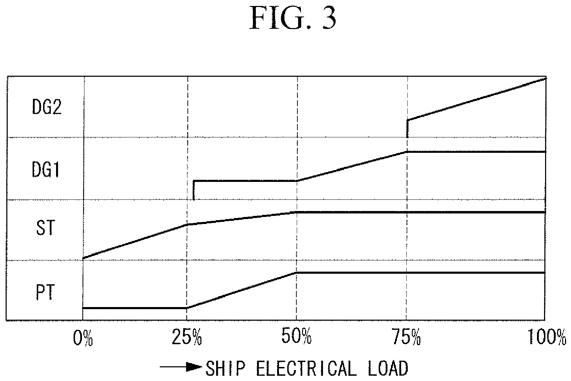

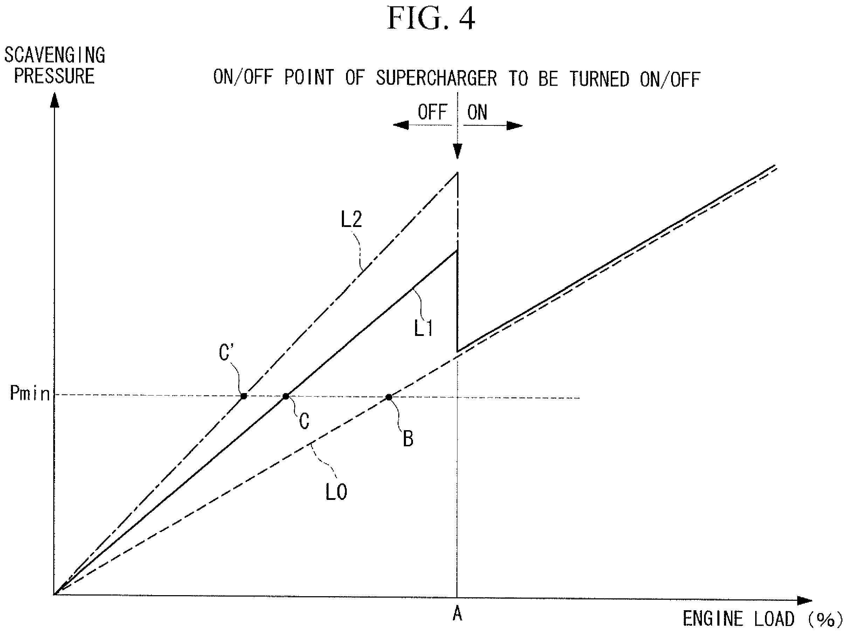

{FIG. 1} FIG. 1 is a schematic diagram of the configuration of an embodiment of a turbo compound system of the present invention.
{FIG. 2} FIG. 2 is a schematic diagram of the configuration of a control apparatus for a power generation system having the turbo-generator shown in FIG. 1.
{FIG. 3} FIG. 3 is a graph showing load sharing relative to the inboard energy demand.
{FIG. 4} FIG. 4 is a graph for describing an advantage achieved by an embodiment of the turbo compound system of the present invention.

### {Description of Embodiments}

An embodiment of a turbo compound system and a method for operating the same of the present invention will be described below with reference to the drawings.

The invention is solely defined by appended independent claims 1 and 2.

As shown in FIG. 1, a marine diesel engine 1 according to this embodiment includes a diesel engine body (for example, a low-speed two-cycle diesel engine) 2, a first exhaust turbocharger (main exhaust turbocharger) 3, a second exhaust turbocharger (sub exhaust turbocharger) 4, a power turbine 5, a steam turbine 10, and a turbo-generator 25 connected to the power turbine 5 and the steam turbine 10.

A screw propeller (not shown) is directly or indirectly attached to a crankshaft (not shown) that constitutes the diesel engine body (hereinbelow, the "engine body") 2 via a propeller shaft (not shown). The engine body 2 is provided with cylinder portions 6 each composed of a cylinder liner (not shown), a cylinder cover (not shown), etc., and a piston (not shown) joined to a crankshaft is disposed inside each cylinder portion 6. Furthermore, an exhaust port (not shown) of each cylinder portion 6 is connected to an exhaust manifold 7. The exhaust manifold 7 is connected to an inlet side of a turbine unit 3a of the first exhaust turbocharger (hereinbelow, the "first supercharger") 3 via a first exhaust pipe L1, is connected to an inlet side of a turbine unit 4a of the second exhaust turbocharger (hereinbelow, the "second supercharger") 4 via a second exhaust pipe L2, and is connected to an inlet side of the power turbine 5 via a third exhaust pipe L3. On the other hand, an air-supply port (not shown) of each cylinder portion 6 is connected to an air-supply manifold 8, and the air-supply manifold 8 is connected to a compressor unit 3b of the first supercharger 3 via a first air-supply pipe L4, and is connected to a compressor unit 4b of the second supercharger 4 via a second air-supply pipe L5.

The first supercharger 3 is composed mainly of the turbine unit 3a driven by exhaust gas (combustion gas) guided from the engine body 2 via the first exhaust pipe L1, the compressor unit 3b that is driven by the turbine unit 3a and pumps outside air to the engine body 2, and a casing (not shown) provided between the turbine unit 3a and the compressor unit 3b to support them.

A rotation shaft 3c is inserted through the casing such that one end is projected toward the turbine unit 3a side and the other end is projected toward the compressor unit 3b. One end of the rotation shaft 3c is attached to a turbine disk (not shown) of a turbine rotor (not shown) that constitutes the turbine unit 3a, and the other end of the rotation shaft 3c is attached to a hub (not shown) of a compressor impeller (not shown) that constitutes the compressor unit 3b.

A first valve V1, which is opened or closed by a controller (not shown), is connected to an intermediate location in the first exhaust pipe L1. A third valve V3, which is opened or closed by a controller (not shown), is connected to an outlet side of a compressor 3b.

The second supercharger 4 is composed mainly of a turbine unit 4a driven by exhaust gas guided from the engine body 2 via the second exhaust pipe L2, a compressor unit 4b that is driven by the turbine unit 4a and pumps outside air to the engine body 2, and a casing (not shown) provided between the turbine unit 4a and the compressor unit 4b to support them.

A rotation shaft 4c is inserted through the casing such that one end is projected toward the turbine unit 4a side and the other end is projected toward the compressor unit 4b. One end of the rotation shaft 4c is attached to a turbine disk (not shown) of a turbine rotor (not shown) that constitutes the turbine unit 4a, and the other end of the rotation shaft 4c is attached to a hub (not shown) of a compressor impeller (not shown) that constitutes the compressor unit 4b.

A muffler (not shown) is provided at an intermediate location in each of the first air-supply pipe L4 and the second air-supply pipe L5, which are connected to the inlet sides of the compressor units 3b and 4b, and the outside air having passed through the muffler is guided to the corresponding compressor unit 3b or 4b. An air cooler (intercooler) 9, a surge tank (not shown), etc., are connected to an intermediate location in each of the first air-supply pipe L4 and the second air-supply pipe L5 connected to the outlet sides of the compressor units 3b and 4b, and the outside air having passed through the compressor unit 3b or 4b is supplied to the air-supply manifold 8 of the engine body 2, after passing through the air cooler 9, the surge tank, etc.

The power turbine 5 is rotationally driven by the exhaust gas extracted from the exhaust manifold 7 via the third exhaust pipe L3, and the steam turbine 10 is rotationally driven by the steam generated by the exhaust-gas economizer 11 and supplied thereto.

The exhaust gas from the turbine unit 3a of the first supercharger 3 and the turbine unit 4a of the second supercharger 4 is introduced into the exhaust-gas economizer 11 via a sixth exhaust pipe L6. Furthermore, the exhaust gas discharged from the outlet side of the power turbine 5 via a seventh exhaust pipe L7 is introduced into the exhaust-gas economizer 11. In a heat exchange unit 21 of the exhaust-gas economizer 11, water supplied from a water supply pipe 23 is heated and evaporated by the heat of the introduced exhaust gas, and steam is generated. The steam generated in the heat exchange unit 21 is introduced into the steam turbine 10 via a first steam pipe J1, and the steam, after having been used in the steam turbine 10, is discharged through a second steam pipe J2 and is guided to a condenser (condenser) (not shown).

The power turbine 5 and the steam turbine 10 are joined in series and drive the turbo-generator 25. A rotation shaft 29 of the steam turbine 10 is connected to the turbo-generator 25 via a reduction gear and a coupling, which are not shown, and a rotation shaft 27 of the power turbine 5 is connected to the rotation shaft 29 of the steam turbine 10 via a reduction gear (not shown) and a clutch 31. A clutch that engages and disengages at a predetermined rotational speed is used as a clutch 31, and, for example, an SSS (Synchro-Self-Shifting) clutch is suitable.

The third exhaust pipe L3 is provided with an exhaust-gas-amount adjusting valve 33 that controls the amount of gas introduced into the power turbine 5, and an emergency-stop emergency shut-off valve 35 that shuts off the supply of exhaust gas to the power turbine 5 in an emergency. In order to prevent excessive supercharging (supercharging beyond the optimum operation pressure of the engine) to the turbine units 3a and 4a of the superchargers 3 and 4, which may occur when the emergency-stop emergency shut-off valve 35 is closed, a bypass valve 34 is provided between them and the seventh exhaust pipe L7.

Furthermore, the first steam pipe J1 is provided with a steam-amount adjusting valve 37 that controls the amount of steam introduced into the steam turbine 10, and an emergency-stop emergency shut-off valve 39 that shuts off the supply of steam to the steam turbine 10 in an emergency.

The degrees of opening of the above-described exhaust-gas-amount adjusting valve 33 and the steam-amount adjusting valve 37 are controlled by a turbo-generator control apparatus 43, which will be described using FIG. 2.

As has been described above, the turbo-generator 25 is driven by utilizing the exhaust energy of the exhaust gas (combustion gas) from the engine body 2 as motive power.

FIG. 2 schematically shows the configuration of the control apparatus for the power generation system having the turbo-generator 25 shown in FIG. 1.

The turbo-generator control apparatus 43 shown in FIG. 2 constitutes a part of an inboard control apparatus that controls the first supercharger 3 and the second supercharger 4.

The power generation system includes a plurality of (two, in this embodiment) diesel engine generators 60 installed inboard separately from and in addition to the turbo-generator 25.

A signal from a power sensor 45 that detects the output power of the turbo-generator 25 and a signal from a rotation sensor 49 that detects the rotational speed of the rotation shaft 29 of the steam turbine 10, serving as the rotational speed of the turbo-generator 25, are input to the turbo-generator control apparatus 43. Output signals from the diesel engine generators 60 and a signal from an inboard-energy-consumption sensor 51 that detects the inboard energy consumption are input to the turbo-generator control apparatus 43.

The turbo-generator control apparatus 43 includes a load-sharing control unit 53, a power-turbine governor unit 55, a steam-turbine governor unit 57, and a governor unit (not shown) for the diesel engine generators 60.

As shown in FIG. 3, the load-sharing control unit 53 determines the load to be shared by the power turbine 5, the steam turbine 10, and the diesel engine generators 60, according to the inboard energy demand.

The horizontal axis in FIG. 3 represents the percentage with respect to the rated inboard power demand of 100%. In the vertical-axis direction, from below, the power turbine (PT) 5, the steam turbine (ST) 10, the first diesel engine generator (DG1) 60, and the second diesel engine generator (DG2) 60 are listed, and the vertical direction of each box represents the output. The output control to be described below is an example, and a configuration in which the power turbine 5, the steam turbine 10, and the diesel engine generators 60 have substantially the same output capacity is assumed in this embodiment. However, in a system in which the preset outputs are different, the control reference for the inboard power demand is appropriately changed to optimize the load sharing.

When the inboard power demand is from 0 to 25%, while keeping the output of the power turbine 5 to a minimum, the output of the steam turbine 10 is gradually increased according to an increase in the inboard power demand, or the output of the steam turbine 10 is gradually reduced according to a decrease in the inboard power demand. By preferentially using the steam turbine 10 in this way, generation and dumping (releasing into the air) of excess steam are eliminated.

When the inboard power demand is from 25 to 50%, the outputs of the steam turbine 10 and the power turbine 5 are gradually increased according to an increase in the inboard power demand, or the outputs of the steam turbine 10 and the power turbine 5 are gradually reduced according to a decrease in the inboard power demand. In this case, the output of the power turbine 5 is increased or reduced so as to compensate for the difference between the inboard power demand and the output of the steam turbine 10, and generation and dumping of (releasing into the condenser) of excess steam are eliminated. The first diesel engine generator 60 starts up at a minimum output so as to compensate for the inboard power demand.

When the inboard power demand is from 50 to 75%, the steam turbine 10 and the power turbine 5 constantly output their rated powers. The output of the first diesel engine generator 60 is gradually increased according to an increase in the inboard power demand, or the output of the first diesel engine generator 60 is gradually reduced according to a decrease in the inboard power demand.

When the inboard power demand is from 75 to 100%, the steam turbine 10, the power turbine 5, and the first diesel engine generator 60 constantly output their rated powers. The output of the second diesel engine generator 60 is gradually increased according to an increase in the inboard power demand, or the output of the second diesel engine generator 60 is gradually reduced according to a decrease in the inboard power demand.

Output signals according to the load factors, determined as shown in FIG. 3, are output from the load-sharing control unit 53 to the corresponding power-turbine governor unit 55, steam-turbine governor unit 57, and governor unit for the diesel engine generators 60, as shown in FIG. 2.

In the power-turbine governor unit 55, according to the output of the power turbine 5 instructed by the load-sharing control unit 53, and based on a preset control function for rotational-speed droop control (proportional control), a control signal is calculated on the basis of a deviation from the actual rotational speed detected by the rotation sensor 49, such that fluctuating rotational speed of the turbo-generator 25 is stabilized at a target rotational speed. Then, the control signal is output to the exhaust-gas-amount adjusting valve 33, and the degree of opening of the exhaust-gas-amount adjusting valve 33 is controlled, thus controlling the flow rate of exhaust gas to be supplied to the power turbine 5. This rotational-speed droop-control function is a function for calculating the level of control by multiplying the deviation between the target rotational speed and the actually controlled current rotational speed by the proportional gain.

Also in the steam-turbine governor unit 57, similarly to the power-turbine governor unit 55, according to the output load ratio of the steam turbine 10 instructed by the load-sharing control unit 53, and based on a preset control function for rotational speed droop control (proportional control), a control signal is calculated on the basis of a deviation from the actual rotational speed detected by the rotation sensor 49, such that the fluctuating rotational speed of the turbo-generator 25 is stabilized at a target rotational speed. Then, the control signal is output to the steam-amount adjusting valve 37, and the degree of opening of the steam-amount adjusting valve 37 is controlled, thus controlling the amount of steam to be supplied to the steam turbine 10.

Next, using FIG. 4, an operation method of the turbo compound system having the above-described configuration will be described.

The horizontal axis in FIG. 4 represents the engine load on the engine body 2, and the vertical axis represents the scavenging pressure.

As shown in this figure, when the engine load on the engine body 2 is in a low-load region, i.e., less than or equal to a predetermined value A, the first supercharger 3 is stopped so that only the second supercharger 4 is operated. When the engine load on the engine body 2 is higher than the predetermined value A, the first supercharger 3 and the second supercharger 4 are operated in parallel. Specifically, when the engine load is less than or equal to a predetermined value, the first valve V1 and the third valve V3 are closed by the controllers so that the first supercharger 3 is not activated (operated), and when the engine load is higher than the predetermined value A, the first valve V1 and the third valve V3 are opened by the controllers so that the first supercharger 3 operates normally. The first valve V1 and the third valve V3 are automatically opened or closed by the controllers according to the engine load.

In FIG. 4, a change in scavenging pressure of a normal turbo compound system, in which the number of operating superchargers is not changed according to the engine load, is indicated by a dashed line L0. As shown in this figure, the scavenging pressure linearly increases as the engine load increases.

In contrast, a change in scavenging pressure of a turbo compound system that employs a sequential supercharging method, in which the number of operating superchargers is changed according to the engine load, as in this embodiment, is indicated by a solid line L1. As shown in this figure, because the first supercharger 3 is stopped in the low-load region, the flow rate of the exhaust gas flowing into the second supercharger 4 increases by a corresponding amount, and the scavenging pressure supplied from the second supercharger 4 to the engine body 2 increases. Thus, the minimum engine load that satisfies the minimum scavenging pressure Pmin that enables the power turbine 5 to be activated and the exhaust heat to be recovered shifts to a lower load side from a point B on the dashed line L0, which indicates the normal turbo compound system, to a point C on the solid line L1, which indicates the turbo compound system employing a sequential supercharging method according to this embodiment, increasing the size of the region in which the power turbine 5 can be operated. The minimum scavenging pressure that enables the power turbine 5 to be activated and the exhaust heat to be recovered can be obtained from the pressure at which the power turbine 5 is stably operated; for example, it can be obtained based on the rotational speed at which the clutch 31 (see FIG. 1) engages and disengages.

In this embodiment, the output of the power turbine 5 is reduced according to a decrease in the inboard power demand (see FIG. 3). As a result, the amount of exhaust gas extracted from the exhaust manifold 7 decreases, and hence, the amount of exhaust gas flowing into the second supercharger 4 increases. Thus, as indicated by a one-dot chain line L2 in FIG. 4, the scavenging pressure increases further. Because the scavenging pressure increases further in this way, the minimum engine load at which the power turbine 5 can be activated shifts to an even lower load side, from the point C to a point C', further increasing the region in which the power turbine 5 can be operated. Because the scavenging pressure is increased even when the engine body 2 is operated in a low-load region, the output and efficiency of the engine body 2 can be improved.

With the above-described turbo compound system and the method for operating the same according to this embodiment, the following advantages can be obtained.

Because the first supercharger 3 is stopped when the engine load on the engine body 2 is in a low-load region, i.e., less than or equal to the predetermined value A, the flow rate of the exhaust gas flowing into the second supercharger 4 increases by a corresponding amount, and the scavenging pressure supplied from the second supercharger 4 to the engine body 2 increases. With this configuration, even when the engine body 2 is in a low-load region, the minimum scavenging pressure Pmin that enables the power turbine 5 to be activated and the exhaust heat to be recovered can be obtained. Thus, the exhaust heat energy from the engine body 2 can be efficiently recovered as motive power (power-generation load), achieving a further energy saving.

Furthermore, because the output of the power turbine 5 is reduced by reducing the amount of exhaust gas extracted from the engine body 2, by reducing the amount of exhaust gas extracted, the amount of exhaust gas flowing into the second supercharger 4 is increased, and hence, the scavenging pressure can be increased. With this configuration, even when the engine body 2 has a low load, the output and efficiency of the engine body 2 can be improved by increasing the scavenging pressure.

Because power generation can be performed by the steam turbine 10, which recovers heat by using the exhaust-gas economizer 11, even if the output of the power turbine 5 is reduced, the required power generation output can be ensured.

When the power demand decreases, the output of the power turbine 5 is reduced so as to compensate for the difference between the output of the steam turbine 10 and the power demand. With this configuration, because an increase in scavenging pressure due to a reduction in the output of the power turbine 5 preferentially occurs, it is possible to achieve improvements in the output and efficiency of the engine body 2.

Even when the power demand decreases, because the output of the power turbine 5 is reduced in preference to that of the steam turbine 10 by reducing the output of the power turbine 5 so as to compensate for the difference between the output of the steam turbine 10 and the power demand, an excessive reduction in the output of the steam turbine 10 can be suppressed as much as possible. With this configuration, it is possible to avoid a situation where steam generated in the exhaust-gas economizer 11 becomes redundant because of an excessive reduction in the output of the steam turbine 10 and is released outside (for example, into the condenser). Thus, it is possible to efficiently recover the exhaust heat from the engine body 2 without waste.

Although a configuration in which two exhaust turbochargers are used has been described in this embodiment, the present invention is not limited thereto; three or more exhaust turbochargers may be used. Furthermore, when three or more exhaust turbochargers are used, the number of exhaust turbochargers stopped when the engine body 2 has a low load is not limited to one, but may be two or more.

Although a marine turbo compound system has been described in this embodiment, it may also be used as a land-based turbo compound system.

### {Reference Signs List}

- 1:: marine diesel engine
- 2:: engine body
- 3:: first supercharger (exhaust turbocharger)
- 4:: second supercharger (exhaust turbocharger)
- 5:: power turbine
- 10:: steam turbine
- 11:: exhaust-gas economizer (exhaust gas boiler)
- 25:: turbo-generator

## Claims

1. A turbo compound system comprising:
a plurality of exhaust turbochargers (3,4) arranged to be driven by exhaust gas introduced from an engine body (2);
a power turbine (5) arranged to be driven by exhaust gas extracted from an upstream side of the exhaust turbochargers (3,4);
a steam turbine (10) that is connected to a rotation shaft (27) of the power turbine (5) and is arranged to be driven by steam generated by an exhaust gas boiler (11), which is arranged to utilize exhaust gas of the engine body (2);
a generator (25,60) connected to rotation shafts (27,29) of the power turbine (5) and the steam turbine (10); and
a control unit (43) that is arranged to control an operation of the exhaust turbochargers (3,4), the power turbine (5), and the steam turbine (10),
wherein the control unit (43) is arranged to reduce an output of the power turbine (5) by stopping at least one of the exhaust turbochargers (3,4) when an engine load on the engine body (2) is less than or equal to a predetermined value and by reducing an amount of exhaust gas extracted from the engine body (2) to the power turbine (5) when a power demand is smaller than a maximum power generation output achievable with the turbo compound system, and
wherein the control unit (43) is arranged to reduce the output of the power turbine (5) so as to compensate for the difference between an output of the steam turbine (10) and the power demand, when the power demand decreases.

2. A method for operating a turbo compound system equipped with:
a plurality of exhaust turbochargers (3,4) driven by exhaust gas introduced from an engine body (2);
a power turbine (5) driven by exhaust gas extracted from an upstream side of the exhaust turbochargers (3,4);
a steam turbine (10) that is connected to a rotation shaft (27) of the power turbine (5) and is driven by steam generated by an exhaust gas boiler (11), which utilizes exhaust gas of the engine body (2);
a generator (25,60) connected to rotation shafts (27,29) of the power turbine (5) and the steam turbine (10); and
a control unit (43) that controls an operation of the exhaust turbochargers (3,4), the power turbine (5), and the steam turbine (10),
wherein the control unit (43) reduces an output of the power turbine (5) by stopping at least one of the exhaust turbochargers (3,4) when an engine load on the engine body (2) is less than or equal to a predetermined value and by reducing an amount of exhaust gas extracted from the engine body (2) to the power turbine (5) when a power demand is smaller than a maximum power generation output achievable with the turbo compound system, and
wherein the control unit (43) reduces the output of the power turbine (5) so as to compensate for the difference between an output of the steam turbine (10) and the power demand, when the power demand decreases.

## Patentansprüche

1. Ein Turbo-Compound-System mit:
einer Vielzahl von Abgas-Turboladern (3,4), die angeordnet sind, um durch von einem Antriebsmaschinenkörper (2) eingebrachtes Abgas angetrieben zu werden,
einer Antriebsturbine (5), die angeordnet ist, um durch von einer stromaufwärtigen Seite der Abgas-Turbolader (3,4) extrahiertes Abgas angetrieben zu werden,
einer Dampfturbine (10), die mit einer Drehwelle (27) der Antriebsturbine (5) verbunden und angeordnet ist, um durch Dampf angetrieben zu werden, der durch einen Abgasboiler (11) erzeugt wird, welcher angeordnet ist, um Abgas des Antriebsmaschinenkörpers (2) zu nutzen,
einem Generator (25,60), der mit Drehwellen (27,29) der Antriebsturbine (5) und der Dampfturbine (10) verbunden ist, und
einer Steuereinheit (43), die angeordnet ist, um einen Betrieb der Abgas-Turbolader (3,4), der Antriebsturbine (5) und der Dampfturbine (10) zu steuern,
wobei die Steuereinheit (43) angeordnet ist, um eine Ausgabe der Antriebsturbine (5) durch Stoppen von zumindest einem der Abgas-Turbolader (3,4), wenn eine Antriebsmaschinenlast an dem Antriebsmaschinenkörper (2) geringer als oder gleich einem vorbestimmten Wert ist, und durch Verringern einer Menge von Abgas, die von dem Antriebsmaschinenkörper (2) zu der Antriebsturbine (5) extrahiert wird, wenn ein Energiebedarf geringer ist als eine mit dem Turbo-Compound-System maximal erreichbare Energieerzeugungsausgabe, zu verringern, und
wobei die Steuereinheit (43) angeordnet ist, um die Ausgabe der Antriebsturbine (5) so zu verringern, dass die Differenz zwischen einer Ausgabe der Dampfturbine (10) und dem Energiebedarf kompensiert wird, wenn der Energiebedarf abnimmt.

2. Ein Verfahren zum Betreiben eines Turbo-Compound-Systems, das ausgestattet ist mit:
einer Vielzahl von Abgas-Turboladern (3,4), die durch von einem Antriebsmaschinenkörper (2) eingebrachtes Abgas angetrieben werden,
einer Antriebsturbine (5), die durch von einer stromaufwärtigen Seite der Abgas-Turbolader (3,4) extrahiertes Abgas angetrieben werden,
einer Dampfturbine (10), die mit einer Drehwelle (27) der Antriebsturbine (5) verbunden ist und durch Dampf angetrieben wird, der durch einen Abgasboiler (11) erzeugt wird, welcher Abgas des Antriebsmaschinenkörpers (2) nutzt,
einem Generator (25,60), der mit Drehwellen (27,29) der Antriebsturbine (5) und der Dampfturbine (10) verbunden ist, und
einer Steuereinheit (43), die einen Betrieb der Abgas-Turbolader (3,4), der Antriebsturbine (5) und der Dampfturbine (10) steuert,
wobei die Steuereinheit (43) eine Ausgabe der Antriebsturbine (5) durch Stoppen von zumindest einem der Abgas-Turbolader (3,4), wenn eine Antriebsmaschinenlast an dem Antriebsmaschinenkörper (2) geringer als oder gleich einem vorbestimmten Wert ist, und durch Verringern einer Menge von Abgas, die von dem Antriebsmaschinenkörper (2) zu der Antriebsturbine (5) extrahiert wird, wenn ein Energiebedarf geringer ist als eine mit dem Turbo-Compound-System maximal erreichbare Energieerzeugungsausgabe, verringert, und
wobei die Steuereinheit (43) die Ausgabe der Antriebsturbine (5) so verringert, dass die Differenz zwischen einer Ausgabe der Dampfturbine (10) und dem Energiebedarf kompensiert wird, wenn der Energiebedarf abnimmt.

## Revendications

1. Système turbo compound comprenant:
une pluralité de turbocompresseurs (3, 4) d'échappement, disposés de manière à être entraînés par du gaz d'échappement introduit à partir d'un corps (2) de moteur,
une turbine (5) de puissance, disposée de manière être entraînée par du gaz d'échappement extrait d'un côté en amont des turbocompresseurs (3, 4) d'échappement,
une turbine (10) à vapeur, qui est reliée à un arbre (27) de rotation de la turbine (5) de puissance et qui est disposée de manière à être entraînée par de la vapeur produite par une chaudière (11) de gaz d'échappemen,t qui est disposée de manière à utiliser du gaz d'échappement du corps (2) du moteur,
une génératrice (25, 60) reliée aux arbres (27, 29) tournants de la turbine (5) de puissance et de la turbine (10) à vapeur et
une unité (43) de commande qui est disposée de manière à commander un fonctionnement des turbocompresseurs (3, 4) d'échappement de la turbine (5) de puissance et de la turbine (10) à vapeur,
dans lequel l'une unité (43) de commande est disposée de manière à réduire une sortie de la turbine (5) de puissance en arrêtant au moins l'un des turbocompresseurs (3, 4) d'échappement lorsqu'une charge de moteur sur le corps (2) du moteur est inférieure ou égale à une valeur déterminée à l'avance et en réduisant une quantité de gaz d'échappement extraite du corps (2) du moteur vers la turbine (5) de puissance lorsqu'une demande de puissance est plus petite qu'une sortie de production maximum de puissance pouvant être obtenue par le système turbo compound et
dans lequel l'unité (43) de commande est disposée de manière à réduire la sortie de la turbine (5) de puissance de manière à compenser la différence entre une sortie de la turbine (10) à vapeur et la demande de puissance lorsque la demande de puissance diminue.

2. Procédé pour faire fonctionner un système turbo compound équipé de:
une pluralité de turbocompresseurs (3, 4) d'échappement entraînés par du gaz d'échappement introduit à partir d'un corps (2) de moteur,
une turbine (5) de puissance entraînée par du gaz d'échappement extrait d'un côté en amont des turbocompresseurs (3, 4) d'échappement,
une turbine (10) à vapeur, qui est reliée à un arbre (27) tournant de la turbine (5) de puissance et qui est entraînée par de la vapeur produite par une chaudière (11) de gaz d'échappement, qui utilise du gaz d'échappement du corps (2) du moteur,
une génératrice (25, 60) reliée aux arbres (27, 29) tournants de la turbine (5) de puissance et de la turbine (10) à vapeur et
une unité (43) de commande, qui commande un fonctionnement des turbocompresseurs (3, 4) d'échappement, de la turbine (5) de puissance et de la turbine (10) à vapeur,
dans lequel l'unité (43) de commande réduit une sortie de la turbine (5) de puissance en arrêtant au moins l'un des turbocompresseurs (3, 4) d'échappement lorsqu'une charge de moteur sur le corps (2) du moteur est inférieure ou égale à une valeur déterminée à l'avance et en réduisant une quantité de gaz d'échappement extraite du corps (2) du moteur vers la turbine (5) de puissance lorsqu'une demande de puissance est plus petite qu'une sortie de production maximum de puissance pouvant être obtenue par le système turbo compound et
dans lequel l'unité (43) de commande réduit la sortie de la turbine (5) de puissance de manière à compenser la différence entre une sortie de la turbine (10) à vapeur et la demande de puissance lorsque la demande de puissance diminue.
